# EUROPEAN PATENT APPLICATION

(11) **EP 2 149 696 A2**
(43) Date of publication of application: **03.02.2010**
(21) Application number: 09251889.3
(22) Date of filing: 28.07.2009
(51) Int. Cl.: F02F 1/24

(54) **Vehicle engine unit and straddle type vehicle**

(30) Priority: 29.07.2008 JP 2008195244
(71) Applicant: Yamaha Hatsudoki Kabushiki Kaisha, Iwata-shi, Shizuoka-ken 438-8501 (JP)
(72) Inventor: Nagai, Yoshitaka, Iwata-shi, Shizuoka-ken 438-8501 (JP); Ishii, Wataru, Iwata-shi, Shizuoka-ken 438-8501 (JP); Tsuzuku, Hiroyuki, Iwata-shi, Shizuoka-ken 438-8501 (JP)
(74) Representative: Price, Paul Anthony King

(57) **Abstract**

A single air intake port 32 is connected to a principal surface 29 of a combustion chamber defining portion 105 of a cylinder head 22. A first end 372a of a valve shaft 372 of an air intake valve 37 is connected to a valve head. An injection nozzle 47b of an injector 47 injects the fuel in the form of mist toward the combustion chamber B4 through the air intake port 32. At least while idling, assist air is led to a space near the injection nozzle 47b. As viewed in the cylinder axis direction, the first end 372a of the valve shaft 372 is arranged between the center axis A4 of the injection nozzle 47b and an igniter 115 of an ignition plug 104. This improves fuel combustion efficiency by promoting atomization of fuel.

## Description

### Technical Field

The present invention relates to an vehicle engine unit and a straddle type vehicle.

### Background Art

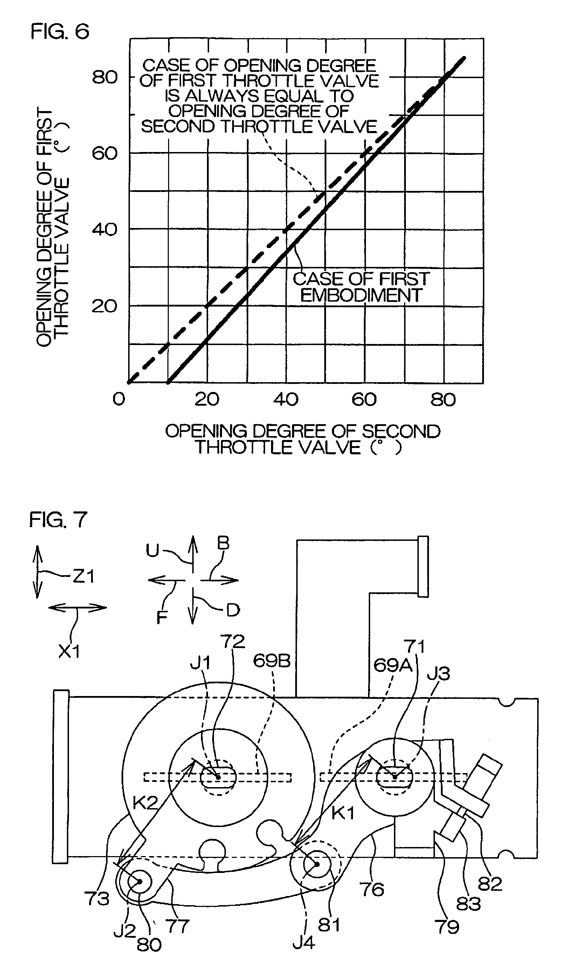

W02004/038214 describes a motorcycle in which an engine is installed. The engine disclosed in W02004/038214 (Fig. 7) has an injector arranged just proximal to an air intake valve. An assist-air supply port faces the vicinity of an injection port of the injector.

In this engine, a throttle body is provided in the middle of an air intake pipe. Inside the throttle body, two throttle valves are provided so as to open and close. Between the throttle valves in the throttle body, one end of an auxiliary passage is connected. The other end of the auxiliary passage is connected to a cylinder head, and opens near the fuel injection nozzle. In the cylinder head, two air intake ports and two air exhaust ports are provided. Atomization of fuel injected from the injector is promoted by assist-air supplied through the auxiliary passage. The fuel injected in an atomized state flows to the two air intake ports.

In an engine in which the injector is attached to the cylinder head and atomization of the fuel is promoted by assist air passing through the auxiliary passage, there is a demand to further improve the fuel combustion efficiency.

Therefore, an object of the present invention is to further improve fuel combustion efficiency in a vehicle engine unit which has fuel combustion efficiency increased by promoting atomization of the fuel and has an injector attached to a cylinder head.

### Summary

In accordance with a first aspect, a vehicle engine unit of the present invention includes a cylinder block which accommodates a piston in a manner allowing the piston to reciprocate along a cylinder axis; a cylinder head which has a combustion chamber defining portion for defining a combustion chamber with the cylinder block and the piston, and one air intake port defining a part of a main air intake passage communicating with the combustion chamber, and is connected to the cylinder block; an air intake valve which includes a valve head arranged at a connection portion of the air intake port connected to the combustion chamber defining portion and a valve shaft having a first end connected to the valve head, and is arranged to open and close the air intake port; an ignition plug which has an igniter arranged inside the combustion chamber, and is attached to the cylinder head; a fuel injection device which has an injection nozzle for injecting fuel toward the combustion chamber through the air intake port, and is attached to the cylinder head; an air intake pipe which is connected to the cylinder head and defines the main air intake passage with the air intake port; a throttle body which has a tubular member forming a part of the air intake pipe and first and second throttle valves spaced from each other in an intake air flow direction inside the tubular member; and an auxiliary air intake passage defining member defining an auxiliary air intake passage which is branched from the main air intake passage between the first and second throttle valves and leads the intake air to a space near the injection nozzle at least while idling. As viewed in the cylinder axis direction, the first end of the valve shaft is arranged between the center axis of the injection nozzle and the igniter.

The vehicle engine unit of the present invention can realize extremely high fuel combustion efficiency.

### Brief Description of the Drawings

Embodiments of the invention are described below, by way of example only, with reference to the drawings.

Fig. 1 is a left side view of a motorcycle of a first embodiment of the present invention, illustrating the motorcycle partially cut-away.

Fig. 2 is a sectional view illustrating an engine unit as seen from the right side of the engine unit.

Fig. 3 is a sectional view of a cylinder head and its peripheral portion shown in Fig. 2.

Fig. 4 is a plan view of the engine unit.

Fig. 5 is a left side view illustrating a throttle body and its peripheral portion in an enlarged scale.

Fig. 6 is a graph showing relationships between the opening degree of a first throttle valve and the opening degree of a second throttle valve.

Fig. 7 is a schematic left side view illustrating the throttle body with its first and second throttle valves being fully open.

Fig. 8 is a view of major portions of the engine unit from the front side of the vehicle, illustrating a state that a head cover of an engine body is removed.

Fig. 9A is a partial sectional view for describing the layout of the major portions of the engine unit, and Fig. 9B is a sectional view along the line IXB-IXB of Fig. 9A substantially corresponding to a view in the cylinder axis direction.

Fig. 10 is an enlarged view of major portions of Fig. 9B.

Fig. 11 is a sectional view of major portions along the line XI-XI of Fig. 10.

Fig. 12 is a schematic perspective view of major portions illustrating a state where an air intake valve is opened at a maximum opening degree.

Fig. 13 is a partial sectional view of major portions of an engine body of another embodiment of the present invention as viewed in the cylinder axis direction.

Fig. 14 is a partial sectional view of major portions of an engine body of still another embodiment of the present invention as viewed in the cylinder axis direction.

Fig. 15 is a partial sectional view illustrating major portions of an engine body of still another embodiment of the present invention as viewed in the cylinder axis direction.

Fig. 16A is a view of major portions of an engine body of still another embodiment of the present invention as viewed in the cylinder axis direction, and Fig. 16B is a sectional view along the line XVIB-XVIB of Fig. 16A.

Fig. 17A is a view of major portions of an engine body of still another embodiment of the present invention as viewed in the cylinder axis direction, and Fig. 17B is a sectional view along the line XVIIB-XVIIB of Fig. 17A.

Fig. 18 is a partial sectional view of major portions of a conventional engine as viewed in the cylinder axis direction.
While the invention is susceptible to various modifications and alternative forms, specific embodiments are shown by way of example in the drawings and are herein described in detail. It should be understood, however, that the drawings and detailed description are not intended to limit the invention to the particular form disclosed, but, on the contrary, the invention is to cover all modifications, equivalents and alternatives falling within the spirit and scope of the present invention as defined in the appended claims.

### Detailed Description

### <Background to the Invention>

In a vehicle engine unit, to improve the fuel combustion efficiency, the configuration described in W02004/038214 is considered. In detail, (1) an injector as a fuel injection device is attached to the cylinder head, and (2) an auxiliary air intake passage for leading intake air is provided near a fuel injection nozzle of the injector.

(1) Attachment of injector to cylinder head

The injector injects fuel to air intake ports formed in the cylinder head near the combustion chamber. Accordingly, the time until the fuel reaches the combustion chamber from being injected from the injection nozzle can be shortened. As a result, the time lag from the fuel injection to combustion can be shortened, such that an ideal combustion state is easily realized. Accordingly, the engine response to a rider's throttle operation can be improved, and the fuel combustion efficiency can be improved.

(2) Connection of auxiliary air intake passage to the vicinity of fuel injection nozzle of injector

With this configuration, assist air is led to the space near the injection nozzle through the auxiliary air intake passage at least while idling. Accordingly, the fuel injected from the injection nozzle and the assist air mix with each other and promote atomization of the fuel. As a result, at least while idling, the fuel combustion efficiency can be made high.

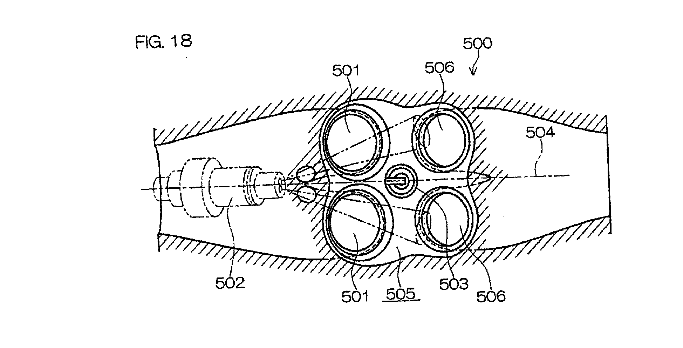

(3) The inventor of the present invention wanted to further improve the combustion efficiency in the engine unit system with high combustion efficiency described in (1) and (2) above. In order to realize this, the inventor considered it preferable that the flow of air-fuel mixture inside the combustion chamber 505 of the engine 500 shown in Fig. 18 was changed into a more complicated flow pattern by compositing a tumble flow and a swirl flow.

However, the conventional engine 500 has two air intake ports 501 and 501 and two air exhaust ports 506 and 506 per one cylinder, such that the ignition plug 503 in the engine 500 is arranged at a position surrounded by the air intake ports 501 and 501 and the air exhaust ports 506 and 506.

Further, in the engine 500, the fuel is supplied into the two air intake ports 501 and 501. Therefore, the injector 502 must be arranged so as to supply the fuel into the two air intake ports 501 and 501. In detail, as seen in Fig. 18, as viewed in the cylinder axis direction (direction perpendicular to the paper surface), the injector 502 must be arranged on a straight line 504 which passes through between the air intake ports 501 and 501 and the center of the ignition plug 503. Thus, there are many restrictions in installation location of the injector 502.

With this arrangement, the air-fuel mixture is blown to the central portion of the combustion chamber 505 through the two air intake ports 501 and 501. As a result, the flow of the air-fuel mixture inside the combustion chamber 505 becomes a tumble flow (vertical vortex) exclusively.

On the other hand, when an engine has only one air intake port, restrictions in installation of the injector are comparatively less, such that it can be expected that the flow pattern of the air-fuel mixture is made more suitable for combustion.

However, the inventor of the present invention found that the combustion efficiency was not improved only by changing the flow of the air-fuel mixture inside the combustion chamber into a composition of a tumble flow and a swirl flow.

In detail, depending on the injection direction, the fuel may collide with the wall surface of the air intake port, etc. Further, by mixing the fuel and assist air, the fuel diffuses widely. As a result, the fuel in the form of mist easily collides with the wall surface of the air intake port and the surface of the valve shaft of the air intake valve. The fuel which has collided with the wall surface of the air intake port and the surface of the valve shaft of the air intake valve may be reduced in degree of atomization or may not enter the combustion chamber depending on circumstances. Therefore, the fuel combustion efficiency deteriorates. Further, the engine response to a rider's throttle operation deteriorates.

Further, to prevent ignition of the ignition plug from being obstructed, it is necessary to consider the ignition plug and the injection direction.

In order to overcome the above problems, the inventor of the present invention arranged one end of the valve shaft of the air intake valve between the center axis of the injection nozzle and the igniter as viewed in the cylinder axis direction. This made it possible to provide an engine with higher combustion efficiency.

### First Embodiment

With reference to the attached drawings, a first embodiment of the present invention will hereinafter be described. In the following description, fore-and-aft directions, vertical directions and lateral (transverse) directions are defined on the basis of a reference posture of a motorcycle 1 which travels straight ahead on a horizontal plane as seen from the perspective of a forward-facing rider of the motorcycle.

In the drawings, a forward direction of the motorcycle is indicated by an arrow F. Similarly, a rearward direction of the motorcycle is indicated by an arrow B. Further, an upward direction of the motorcycle is indicated by an arrow U, and a downward direction of the motorcycle is indicated by an arrow D. A leftward direction of the motorcycle is indicated by an arrow L, and a rightward direction of the motorcycle is indicated by an arrow R.

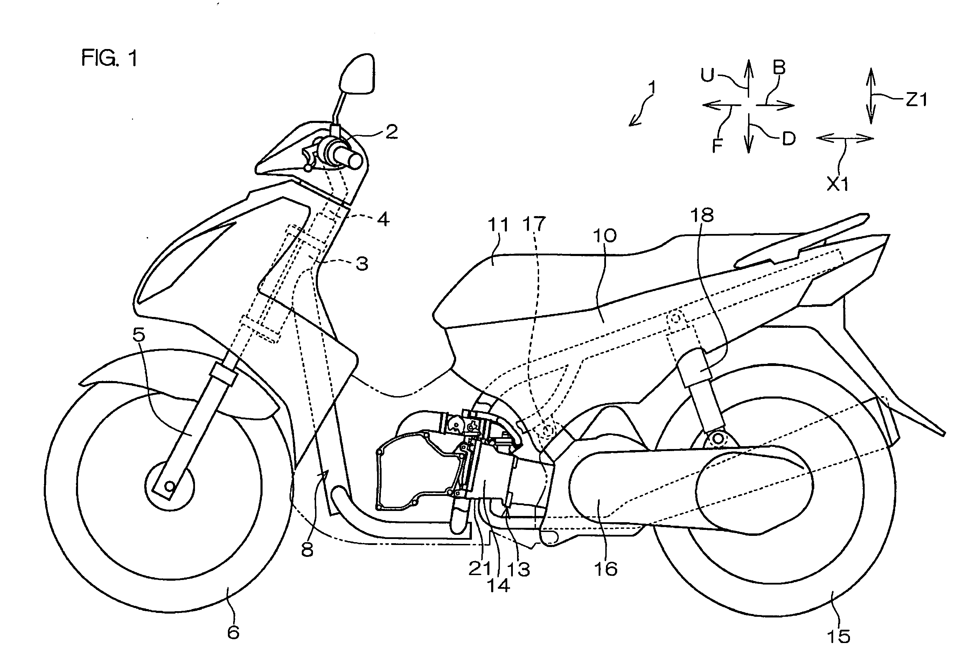

Fig. 1 is a left side view of the motorcycle 1 according to the first embodiment of the present invention. In Fig. 1, the motorcycle 1 is described partly in a broken form. In the drawings, phantom lines are shown by two-dotted and dashed lines, and hidden outlines are shown by broken lines.

In this embodiment, the motorcycle 1 is a scooter. In this embodiment, the scooter will be described as an example of the motorcycle of the present invention, but not by way of limitation. The present invention is applicable to other straddle type vehicles such as so-called motorcycles, mopeds, off-road vehicles, and ATVs (all terrain vehicles) except scooters.

In Fig. 1, the entire motorcycle 1 according to this embodiment is shown. The motorcycle 1 includes handlebars 2 provided in a front portion thereof. The handlebars 2 are operated to steer a front wheel 6 via a steering shaft 4 inserted in a head pipe 3 and front forks 5. The head pipe 3 forms a front end portion of a vehicle body frame 8.

The vehicle body frame 8 is covered by a vehicle body cover 10. On the upper portion of the vehicle body cover 10, a seat 11 is arranged.

To the vehicle body frame 8, an engine unit 13 is attached. The engine unit 13 includes an engine body 14, and a power transmission member 16 for transmitting motive power of the engine body 14 to the rear wheel 15 side. To the rear portion of the engine unit 13, the rear wheel 15 is joined. A rear shock absorber 18 connects the upper portion of the power transmission member 16 and the vehicle body frame 8. This engine unit 13 is supported so as to pivot about a pivot shaft 17 with respect to the vehicle body frame 8 together with the rear wheel 15. Thus, a unit-swing engine is formed.

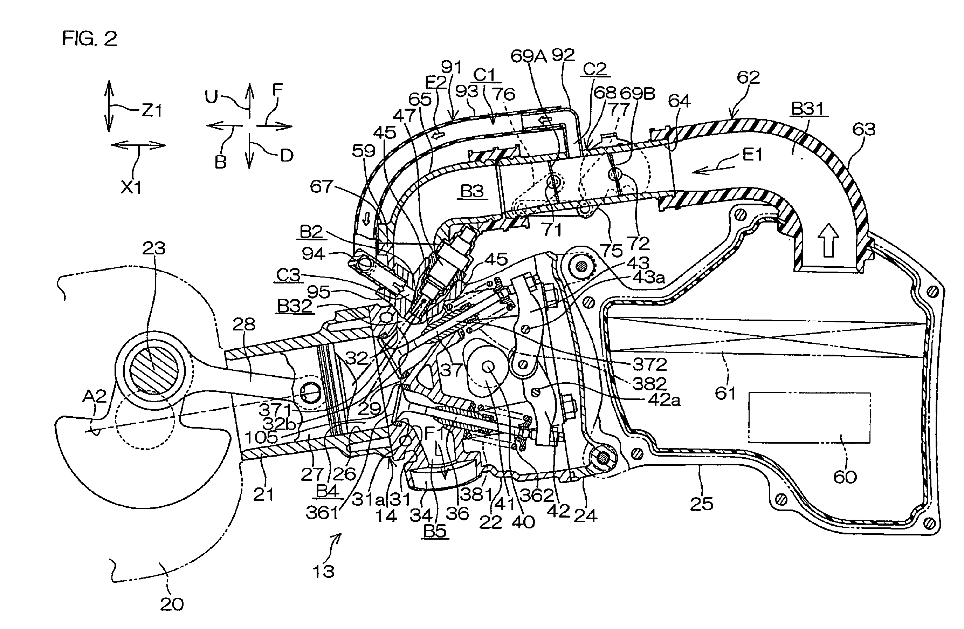

Fig. 2 is a sectional view illustrating the engine unit 13 as seen from the right side of the engine unit 13. The engine body 14 includes an injector 47 (fuel injection device). The engine body 14 is a single-cylinder four-stroke engine.

The engine body 14 is arranged with its cylinder axis A2 substantially horizontal so as to be positioned upward toward the front.

The engine body 14 includes a crank case 20, a cylinder block 21, a cylinder head 22 and a head cover 24. A crank shaft 23 is provided in the crank case 20. The cylinder block 21, the cylinder head 22 and the head cover 24 are arranged in this order forward of the crank case 20.

The crank case 20, the cylinder block 21, the cylinder head 22 and the head cover 24 are connected to one another by bolts or the like. An air cleaner 25 for cleaning intake air fixed to the engine body 14 is arranged forward of the head cover 24 in a vehicle fore-and-aft direction X1. The air cleaner 25 is supported so as to pivot with respect to the vehicle body frame 8 together with the engine unit 13.

The air cleaner 25 has a box shape as a whole, and is arranged forward of the engine body 14. Into the air cleaner 25, the outside air can be taken through an air suction port 60.

In the present embodiment, the inside of the air cleaner 25 is vertically divided by way of example but not by way of limitation. The inside of the air cleaner 25 may be divided fore-and-aftly or laterally. The outside air taken into the air cleaner 25 through the air suction port 60 is filtered with a filter 61, and sucked out through an air intake hose 63.

On the upper surface of the cylinder head 22, an engine side flange 59 is provided. The engine side flange 59 and the air cleaner 25 are connected to each other via an air intake pipe 62. The air intake pipe 62 defines a main intake passage B31 as a portion of the main air intake passage B3, and is arranged above the engine body 14.

The air intake pipe 62 includes an air intake hose 63 connected to the air cleaner 25, a cylindrical tubular member 64 connected to a rear end portion of the air intake hose 63, and a connection pipe 65 connected to a rear end portion of the tubular member 64 and having a rear end portion curved downward.

On the rear end portion side of the connection pipe 65, an air intake pipe side flange 67 is provided. The air intake pipe side flange 67 and the engine side flange 59 abut each other, and fixed by fixation screws not shown. Accordingly, the main air intake passage B32 described later in the cylinder head 22 and the main air intake passage B31 in the air intake pipe 62 communicate with each other, and define a main air intake passage B3 as a whole.

The engine unit 13 further includes a throttle body 68. The throttle body 68 includes the tubular member 64, and two throttle valves, i.e., first and second throttle valves 69A and 69B arranged inside the tubular member 64.

The first and second throttle valves 69A and 69B each serve to open and close the main air intake passage portion B31. The first throttle valve 69A and the second throttle valve 69B are spaced from each other in an intake air flow direction E1 in the main air intake passage B3. The first throttle valve 69A is located downstream of the second throttle valve 69B in the intake air flow direction E1. That is, the first throttle valve 69A is located between the second throttle valve 69B and the cylinder head 22 in the main air intake passage B3. The first throttle valve 69A and the second throttle valve 69B each have a disk shape.

The first throttle valve 69A is supported by a first rotation shaft 71. The second throttle valve 69B is supported by a second rotation shaft 72. The first rotation shaft 71 and the second rotation shaft 72 are supported rotatably by the tubular member 64.

A piston 27 is arranged in a slidable manner in a cylinder bore 26 of the cylinder block 21. The piston 27 can reciprocate along the cylinder axis A2. The piston 27 is connected to the crank shaft 23 via a connecting rod 28. The cylinder head 22 has a recessed principal surface 29. The principal surface 29 is formed in the opposite portion to the piston 27 in the cylinder head 22. A combustion chamber B4 is defined between the principal surface 29 of the cylinder head 22, the cylinder bore 26 and the piston 27.

The cylinder head 22 has an exhaust port 31 and an air intake port 32. The air exhaust port 31 is arranged below the air intake port 32. The upstream end 31 a of the air exhaust port 31 in the exhaust air flow direction F1 opens on the principal surface 29 and accordingly communicates with the combustion chamber B4. The upstream end 31a of the air exhaust port 31 is provided as one. The downstream end 32b of the air intake port 32 in the intake air flow direction E1 opens on the principal surface 29 and accordingly communicates with the combustion chamber B4. The downstream end 32b of the air intake port 32 is provided as a connection portion of the air intake port 32 to be connected to a combustion chamber defining portion 105 described later. The downstream end 32b of the air intake port 32 is provided as one.

The exhaust port 31 defines an exhaust passage B5 present in the cylinder head 22. The exhaust passage B5 extends downward in the cylinder head 22. The exhaust passage B5 communicates with an inside space of an exhaust pipe not shown.

On the other hand, the air intake port 32 defines a main air intake passage B32 present in the cylinder head 22. The main air intake passage B32 communicates with the main air intake passage B31 formed in the connection pipe 65.

With the above-described configuration, the main air intake passage B3 is defined by the air intake hose 63, the tubular member 64, the connection pipe 65, and the air intake port 31 of the cylinder head 22, and in this order, intake air from the air cleaner 25 flows toward the combustion chamber B4.

The upstream end 31 a of the air exhaust port 31 is opened and closed by an air exhaust valve 36 provided in the cylinder head 22. The downstream end 32b of the air intake port 32 is opened and closed by an air intake valve 37 provided similarly in the cylinder head 22. One exhaust valve 36 and one air intake valve 37 are provided. Thus, the engine body 14 is a two-valve type engine including two valves.

Near the air exhaust valve 36, a valve spring 381 is provided. This valve spring 381 applies a spring force to the exhaust valve 36 in a direction of closing the upstream end 31a of the air exhaust port 31. Near the air intake valve 37, a valve spring 382 is provided. This valve spring 382 applies a spring force to the air intake valve 37 in a direction of closing the downstream end 32b of the air intake port 32. In the cylinder head 22, a cam shaft 40 is provided between the valve springs 381, 382. The cam shaft 40 includes an air intake/exhaust cam 41, and is rotatably supported by the cylinder head 22.

An exhaust rocker arm 42 is arranged vertically between the cam shaft 40 and an axial end portion of the exhaust valve 36. The exhaust rocker arm 42 is supported in a swingable manner by an exhaust rocker arm shaft 42a.

On the other hand, an air intake rocker arm 43 is arranged vertically between the cam shaft 40 and an axial end portion of the air intake valve 37. The air intake rocker arm 43 is supported in a swingable manner by an air intake rocker arm shaft 43a. One of the opposite ends of the exhaust rocker arm 42 and one of the opposite ends of the air intake rocker arm 43 are brought into contact with the cam 41 at a predetermined timing. Thus, the air intake valve 37 and the exhaust valve 36 are respectively pressed by the other ends of the rocker arms 42 and 43. The exhaust valve 36 and the air intake valve 37 perform a port opening operation at a predetermined timing for opening the ports 31, 32 against the repulsive force of the valve springs 381, 382.

The injector 47 is arranged in the vicinity of the air intake port 32 in a right upper portion of the cylinder head 22.

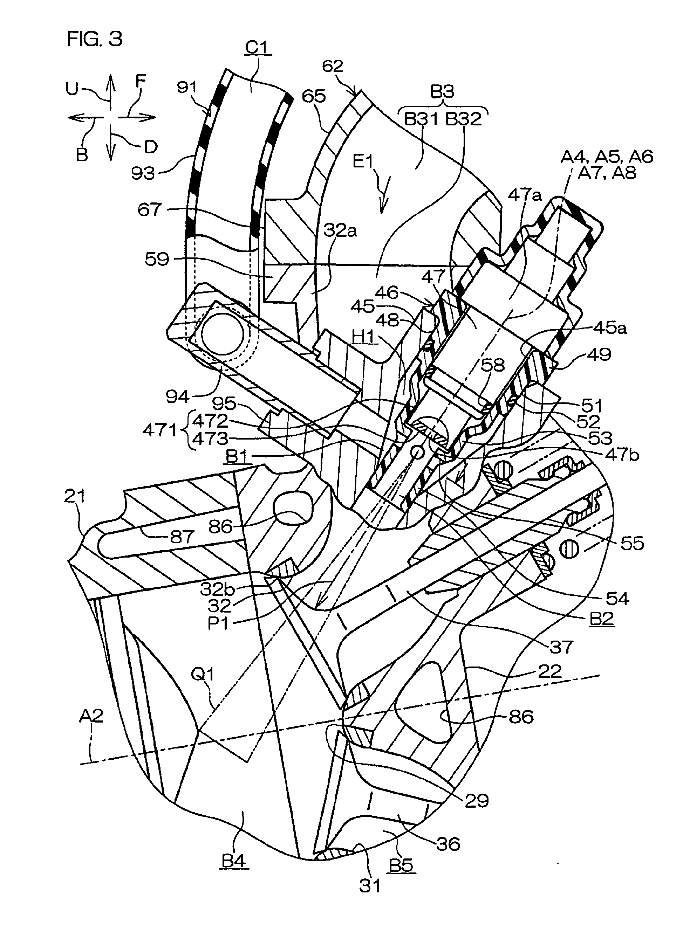

Fig. 3 is a sectional view of the cylinder head 22 and its peripheral portion shown in Fig. 2. As shown in Fig. 3, the injector 47 is arranged in a first boss 45 formed on the cylinder head 22 via a holder 46 made of synthetic resin, and is attached to the cylinder head 22.

The inside space H1 of the first boss 45 communicates with the main air intake passage B32.

The holder 46 includes a cylindrical portion 48 and a flange 49 provided at a proximal end of the cylindrical portion 48. The flange 49 abuts against a distal end of the first boss 45. Thus, the holder 46 is positioned with respect to the first boss 45. The cylindrical portion 48 is provided in the first boss 45. A gap between an outer peripheral surface of a proximal end portion 51 of the cylindrical portion 48 and an inner peripheral surface of the first boss 45 is liquid-tightly sealed by a first seal member 52 such as an O-ring.

A tubular injector body 47a of the injector 47 is inserted through the cylindrical portion 48 of the holder 46, and is held by this holder 46. Substantially half in the longitudinal direction of the injector body 47a is arranged in the first boss 45. The gap between the outer peripheral surface of the injector body 47a and the inner peripheral surface of the holder 46 are liquid-tightly sealed by a second seal member 58 such as an O-ring.

Between the outer peripheral surface of an intermediate portion 53 of the cylindrical portion 48 and the inner peripheral surface of the first boss 45, an annular chamber B1 as a part of a space near the injection nozzle 47b described later of the injector 47 is defined. The distal end edge of the distal end portion 54 of the cylindrical portion 48 and the inner peripheral surface of the first boss 45 are in contact with each other.

The inside space of the distal end portion 54 of the cylindrical portion 48 is an injection space B2 as a part of the space near the injection nozzle 47b described later of the injector 47. The injection space B2 is formed in the cylinder head 22, and communicates with the combustion chamber B4 via the main air intake passage B32. The distal end portion 54 of the cylindrical portion 48 is formed with a plurality of through-holes 55. The chamber B1 communicates with the injection space B2 via the through-holes 55. The chamber B1 communicates with an auxiliary air intake passage C1 to be described later.

The injector 47 serves to inject fuel in a fuel tank (not shown) to the main air intake passage B32. The injector 47 includes an injector body 47a having a narrow and long shape, and an injection nozzle 47b which is an opening positioned at the center of the distal end portion 471 of the injector body 47a.

The distal end portion 471 of the injector body 47a has a cylindrical tube 472 and a disk-shaped end wall 473 arranged so as to close one end of the cylindrical tube 472. The distal end face of the injector 47 is defined by the outer side surface of the end wall 473.

The injection nozzle 47b penetrates through the end wall 473, and faces the injection space B2. The injection nozzle 47b is arranged in a direction of injecting fuel toward the combustion chamber B4 through the downstream end 32b of the air intake port 32.

The injector 47 is arranged so as to incline downward to the rear side of the vehicle as a whole. The fuel injected from the injection nozzle 47b flows into the combustion chamber B4 through the downstream end 32b of the air intake port 32. Inside the combustion chamber B4, as described later, a spiral flow including a tumble flow and a swirl flow is generated.

The downstream end 32b of the air intake port 32 defines the rear end portion of the air intake port 32, and the air intake port 32 extends forward and upward from the downstream end 32b. In the vehicle fore-and-aft direction X1, the injector 47 is arranged on the opposite side of the cylinder block 21 with respect to the downstream end 32b of the air intake port 32.

The timing and amount of injection of the fuel toward the combustion chamber B4 by the injector 47 are controlled by a control unit such as an ECU (Engine Control Unit, Electronic Control Unit) not shown. The timing of injection of the fuel toward the combustion chamber B4 by the injector 47 is set so as to, for example, interlock with the timing of opening and closing of the downstream end 32b of the air intake port 32 by the air intake valve 37.

In the cylinder head 22, water jackets 86 are formed at a plurality of positions surrounding the principal surface 29. The water jackets 86 inside the cylinder head 22 are formed together with water jackets 87 on the cylinder block 21 side. A coolant circulates inside the water jackets 86 and 87.

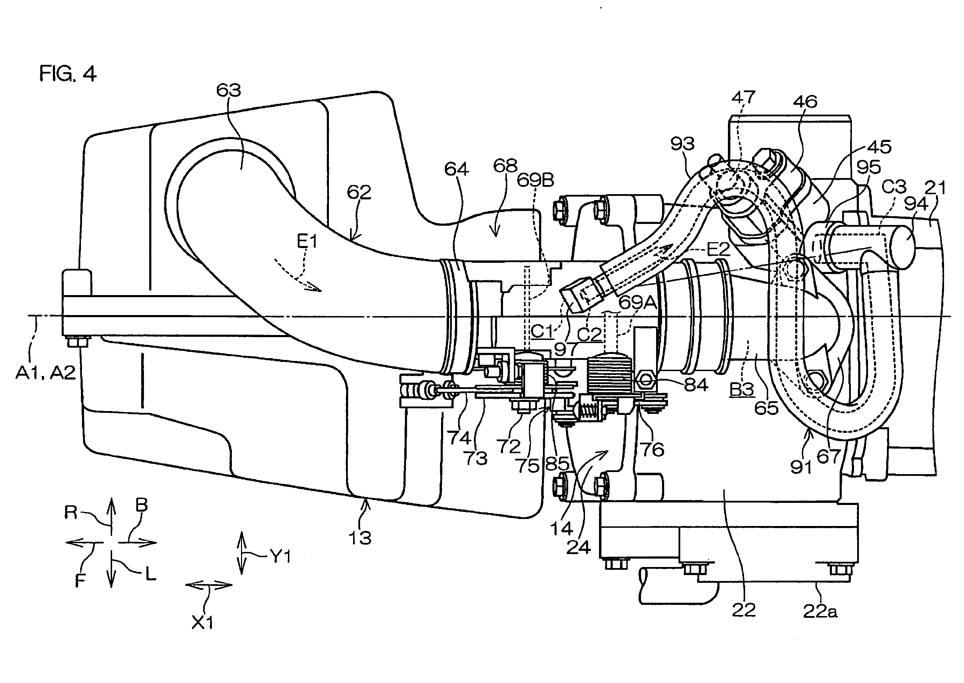

Fig. 4 is a plan view of the engine unit 13. Referring to Fig. 3 and Fig. 4, the main air intake passage B32 extends vertically inside the cylinder head 22. The injector 47 is arranged on the right of the connection pipe 65.

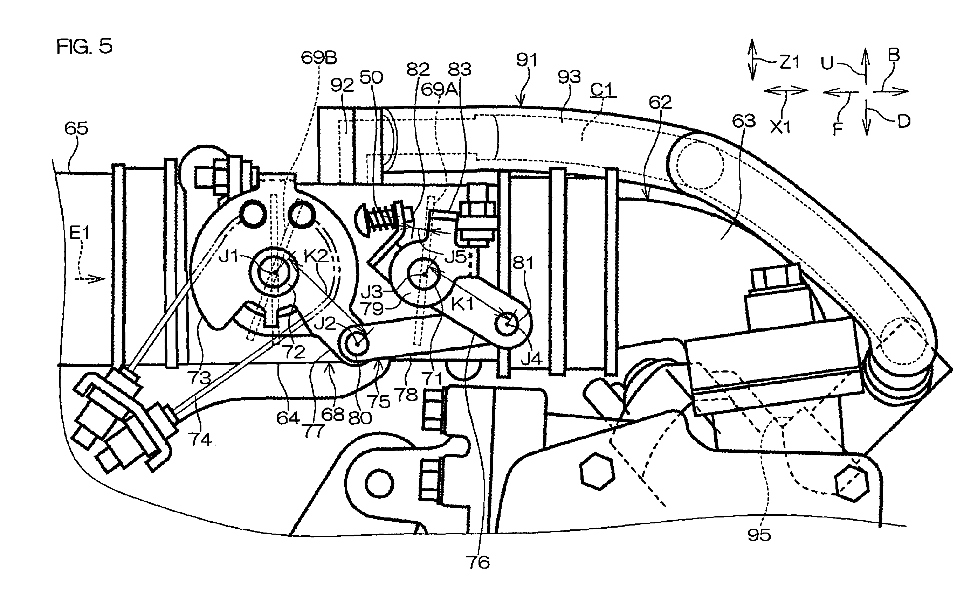

Fig. 5 is a left side view describing the periphery of the throttle body 68 in an enlarged scale. Referring to Fig. 5, the first rotation shaft 71 and the second rotation shaft 72 project leftward from a left side surface of the tubular member 64.

In this embodiment, the throttle body 68 will be described based on a state in which the first throttle valve 69A and the second throttle valve 69B are fully closed. The state in which the first throttle valve 69A and the second throttle valve 69B are fully closed herein means a state of the first throttle valve 69A and the second throttle valve 69B observed when a throttle grip is not operated while idling.

The first throttle valve 69A is rotated together with the first rotation shaft 71 about the first rotation shaft 71 by the rotation of the first rotation shaft 71. Similarly, the second throttle valve 69B is rotated together with the second rotation shaft 72 about the second rotation shaft 72 by the rotation of the second rotation shaft 72.

A driving pulley 73 is coupled to a left end of the second rotation shaft 72 for unitary rotation. A throttle cable 74 is attached to the driving pulley 73. One end of the throttle cable 74 is joined to a throttle grip of a handle 10. The other end of the throttle cable 74 is joined to a driving pulley 73. With this configuration, the driving pulley 73 is rotated by a throttle operation performed by the rider. The rotation of the driving pulley 73 rotates the second rotation shaft 72, thereby opening and closing the second throttle valve 69B.

The opening/closing operation of the second throttle valve 69B is linked with the opening/closing operation of the first throttle valve 69A by a link mechanism 75.

The link mechanism 75 has a so-called lost motion structure such that the first throttle valve 69A starts the opening operation with a time delay after the start of the opening operation of the second throttle valve 69B. The link mechanism 75 is located leftward of the tubular member 64 of the throttle body 68, and includes a first main link member 76, a second main link member 77 arranged forward of the first main link member 76, a sub-link member 78, and a rotation transmission member 79.

The second main link member 77 is a small piece provided integrally with the driving pulley 73, and is rotatable together with the second rotation shaft 72. The second main link member 77 is connected to a distal end portion of the sub-link member 78 via a second connection shaft 80 for relative rotation.

The sub-link member 78 is a long plate member in the vehicle fore-and-aft direction X1, and is arranged below the first rotation shaft 71 and the second rotation shaft 72.

The first main link member 76 is an elongated metal plate member. The first main link member 76 is inclined downward rearward. A lower end portion of the first main link member 76 is connected to a rear end portion of the sub-link member 78 via a first connection shaft 81 for relative rotation.

An upper end portion of the first main link member 76 includes an extension member 50 extending away from a center axis J3 of the first rotation shaft 71. A press member 82 is provided on the extension member 50. The press member 82 projects from the extension member 50 in one of the opposite circumferential directions of the first rotation shaft 71 (in a rightward direction in Fig. 5). Thus, the press member 82 is opposed to a to-be-pressed member 83 (to be described later) of the rotation transmission member 79 circumferentially of the first rotation shaft 71.

An intermediate portion of the first main link member 76 is connected to the first rotation shaft 71 for relative rotation. Thus, the first main link member 76 is rotatable independently of the first rotation shaft 71.

A center axis J1 of the second rotation shaft 72 serving as a pivot center of the second main link member 77 is spaced a distance K2 from a center axis J2 of the second connection shaft 80. Further, the center axis J3 of the first rotation shaft 71 serving as a pivot center of the first main link member 76 is spaced a distance K1 from a center axis J4 of the first connection shaft 81. A relationship between the distances K1 and K2 is K2 > K1.

The rotation transmission member 79 is a metal plate member. The rotation transmission member 79 is connected to the first rotation shaft 71 for unitary rotation. The rotation transmission member 79 includes the to-be-pressed member 83 capable of abutting against the press member 82. With the second throttle valve 69B being fully closed, the press member 82 and the to-be-pressed member 83 are opposed to and spaced a predetermined distance J5 from each other circumferentially of the first rotation shaft 71.

Referring to Fig. 4, a first torsion coil spring 84 is arranged between the tubular member 64 of the throttle body 68 and the first main link member 76. The first torsion coil spring 84 serves to apply a force to the first throttle valve 69A in a valve closing direction.

A second torsion coil spring 85 is arranged between the tubular member 64 of the throttle body 68 and the driving pulley 73. A force of the second torsion coil spring 85 is transmitted to the second rotation shaft 72 via the driving pulley 73. Thus, the force is applied to the second throttle valve 69B in a valve closing direction.

Referring to Fig. 2 and Fig. 3, the engine unit 13 further includes an auxiliary air intake passage defining member 91. The auxiliary air intake passage defining member 91 defines the auxiliary air intake passage C1. The auxiliary air intake passage C1 has an upstream end portion C2 connected to the main air intake passage B31 between the first and second throttle valves 69A, 69B. Further, the downstream end portion C3 of the auxiliary air intake passage C1 is connected to the chamber B1. The auxiliary air intake passage C1 serves to supply assist air, which is applied over the fuel injected in an atomized state from the injector 47 to the injection space B2, and thereby promotes the disintegration of the fuel.

The first boss 45 is formed integrally with the cylinder head 22. The injector 47 is attached to the first boss 45. A fourth boss 95 is formed integrally with the first boss 45. The fourth boss 95 extends substantially perpendicularly to the center axis A1 of the injection nozzle 47b of the injector 47. To the fourth boss 95, a third boss 94 is attached.

The auxiliary air intake passage defining member 91 includes a second boss 92 fixed to the tubular member 64, the fourth boss 95 formed on the cylinder head 22, the third boss 94 attached to the fourth boss 95, and a hose 93 connecting the third boss 94 and the second boss 92.

Fig. 6 is a graph showing relationships between the opening degree of the first throttle valve 69A and the opening degree of the second throttle valve 69B. In Fig. 6, the opening degree of the first throttle valve 69A is zero while idling. Similarly, the opening degree of the second throttle valve 69B is zero while idling.

In Fig. 6, a solid line indicates a relationship between the opening degrees of the first and second throttle valves 69A, 69B in this embodiment. As indicated by the solid line, the opening degree of the first throttle valve 69A is kept at zero when the opening degree of the second throttle valve 69B is not greater than 10 degrees.

On the other hand, a broken line in Fig. 6 indicates that the opening degree of the first throttle valve 69A is always equal to the opening degree of the second throttle valve 69B without the provision of the lost motion structure. As indicated by the broken line and the solid line, the first throttle valve 69A is opened with a time delay after the second throttle valve 69B is opened in this embodiment. The operations of the first and second throttle valves 69A, 69B will be described below in greater detail.

Referring to Figs. 5 and 6, the opening degrees of the first throttle valve 69A and the second throttle valve 69B are controlled in the following manner according to a change in load (throttle operating amount). First, the first throttle valve 69A located on a downstream side with respect to the intake air flow direction E1 is maintained in a fully closed position when the vehicle is operated in an operation state ranging from a non-load operation state (idling state) to a predetermined partial load operation state.

More specifically, until the operation state reaches the partial load operation state, the rotation of the driving pulley 73 occurring due to the throttle operation performed by the rider is not transmitted to the first rotation shaft 71 but transmitted only to the second rotation shaft 72.

This is because the press member 82 of the first main link member 76 and the to-be-pressed member 83 of the rotation transmission member 79 are spaced the predetermined distance J5 from each other circumferentially of the first rotation shaft 71.

Therefore, only the second throttle valve 69B is opened or closed by the rotation of the second rotation shaft 72. At this time, the sub-link member 78 and the first main link member 76 operate in response to the operation of the second main link member 77. Thus, the first main link member 76 is rotated about the first rotation shaft 71. However, the first rotation shaft 71 and the first throttle valve 69A are not rotated until the press member 82 of the first main link member 76 abuts the to-be-pressed member 83.

Therefore, as shown in Figs. 3 and 5, the amount of air flowing into the injection space B2 is controlled only based on the opening degree of the second throttle valve 69B until the operation state reaches the partial load operation state. In the partial load operation state, the assist air flowing into the auxiliary air intake passage C1 is introduced into the injection space B2 via the chamber B1 and the through-holes 55 of the holder 46. The assist air supplied into the injection space B2 is mixed with the fuel injected in the form of mist from the injector 47 in the injection space B2.

At this time, the injected fuel is substantially prevented from adhering onto a peripheral wall of the air intake port 32, because the injector 47 is arranged in the vicinity of the air intake valve 37. This improves the response of the engine to the throttle operation. Further, the disintegration of the fuel is promoted to increase the fuel combustion efficiency. This reduces the possibility of imperfect fuel combustion which is liable to occur during a cold start of the engine.

On the other hand, when the operation state is shifted from the partial load operation state to a higher load operation state, the first throttle valve 69A is opened according to the throttle operation.

Thus, not only the assist air flowing through the auxiliary air intake passage C1 but also the intake air flowing through the upstream end 32a of the air intake port 32 is introduced into the cylinder head 22.

Referring to Fig. 6 and Fig. 7 which is a schematic left side view illustrating the throttle body 68 with the first throttle valve 69A and the second throttle valve 69B being fully open, more specifically, the rotation amount of the first main link member 76 with respect to a reference rotation amount observed while idling exceeds a predetermined level when the operation state is shifted from the partial load operation state to the higher load operation state. As a result, the press member 82 of the first main link member 76 abut the to-be-pressed member 83 of the rotation transmission member 79. Therefore, the rotation transmission member 79 and the first rotation shaft 71 are rotated in response to the rotation of the first main link member 76, whereby the first throttle valve 69A is rotated.

Since the distance K2 is greater than the distance K1 in the link mechanism 75 as described above, the opening/closing speed of the first throttle valve 69A is higher than that of the second throttle valve 69B in the higher load operation state. As a result, the first throttle valve 69A is fully opened, when the second throttle valve 69B is fully opened.

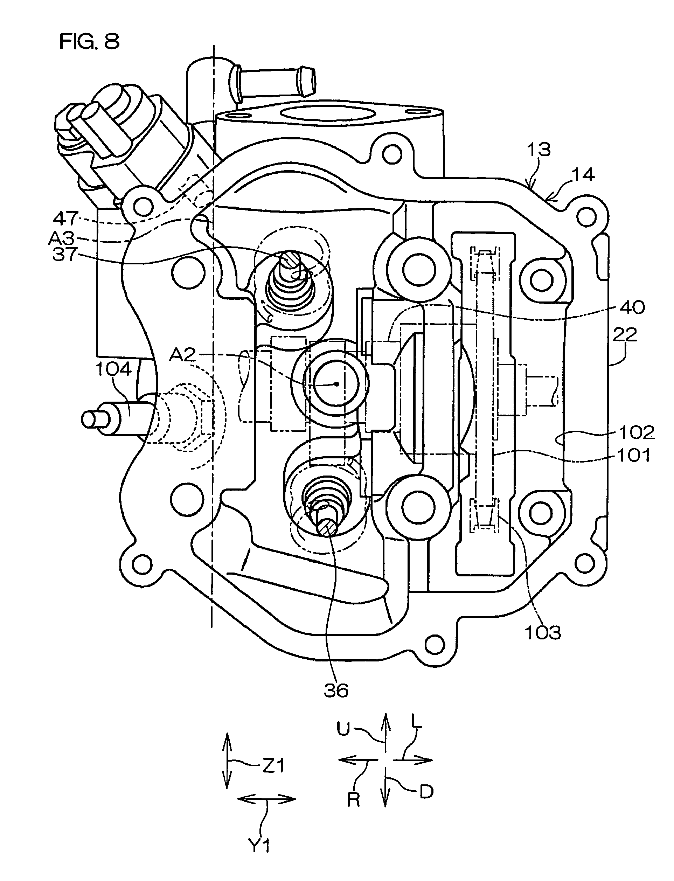

Fig. 8 is a view of major portions of the engine unit 13 from the front side of the vehicle, describing a state that a head cover 24 of the engine body 14 is removed. Referring to Fig. 8, on the left (right in Fig. 8) of the cylinder axis A2 in the cylinder head 22, a housing chamber 102 is formed. In the housing chamber 102, an endless chain 101 for driving a cam shaft 40 is arranged. The housing chamber 102 in the cylinder head 22 communicates with a housing chamber (not shown) on the cylinder block 21 side.

The chain 101 is arranged on the left of the cylinder axis A2. The chain 101 is joined to one end of the cam shaft 40 via a sprocket 103. The chain 101 is joined to a sprocket (not shown) provided on the crank shaft 23. Accordingly, the rotation of the crankshaft 23 is transmitted to the cam shaft 40 via the chain 101 to drive the air exhaust valve 36 and the air intake valve 37.

As viewed in the cylinder axis direction which is the direction of the cylinder axis A2, the chain 101 has a substantially rectangular shape narrow and long vertically. As viewed in the cylinder axis direction, a first virtual straight line A3 which is parallel to the chain 101 and crossing at least one arbitrary point of the injector 47 (for example, the left end point of the injector 47) is regulated. As viewed in the cylinder axis direction, the cylinder axis A2 is positioned between the first virtual straight line A3 and the chain 101.

An ignition plug 104 is attached to the cylinder head 22. The ignition plug 104 and the injector 47 are arranged on the right of the cylinder axis A2. Thus, in the vehicle transverse direction Y1, the ignition plug 104 and the injector 47 are arranged on the same side of the cylinder axis A2. The ignition plug 104 and the injector 47 are lined up vertically. The ignition plug 104 and the chain 101 are arranged on the sides opposite to each other with respect to the cylinder axis A2.

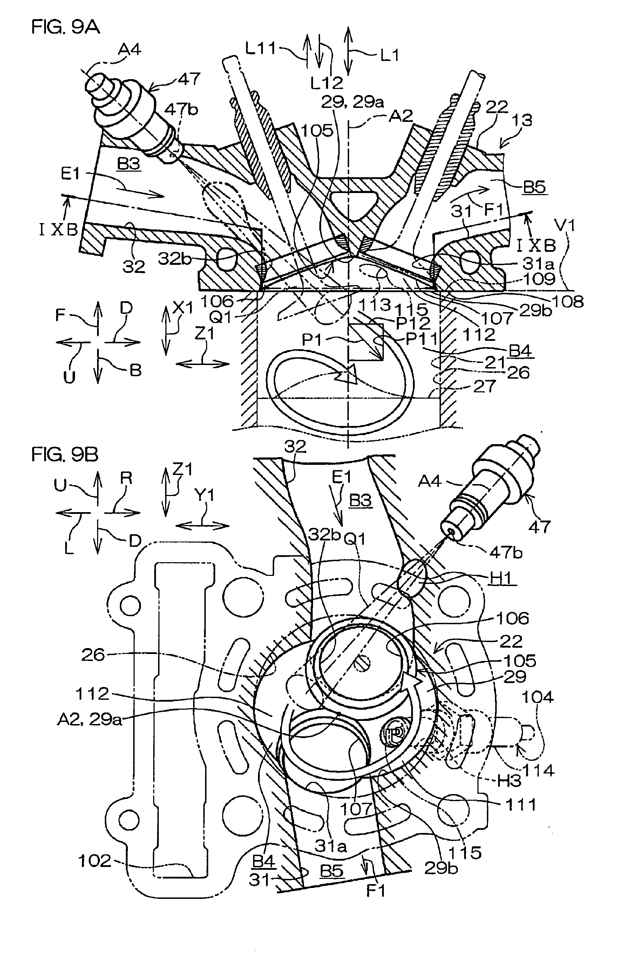

Fig. 9A is a partial sectional view for describing the layout of major portions of the engine unit 13. Fig. 9B is a sectional view along the line IXB-IXB of Fig. 9A, substantially corresponding to a view in the cylinder axis direction. Fig. 9B shows a state as viewed in the cylinder axis direction from the side opposite to the principal surface 29.

Referring to Fig. 9A and Fig. 9B, the vicinity of the downstream end 32b of the air intake port 32 is curved into an L shape in a section along the vehicle vertical direction Z1. The downstream end 32b of the air intake port 32 is connected to the combustion chamber defining portion 105 of the cylinder head 22. The vicinity of the upstream end 31a of the air exhaust port 31 is curved into an L shape in a section along the vehicle vertical direction Z1. The upstream end 31a of the air exhaust port 31 is connected to the combustion chamber defining portion 105.

The combustion chamber defining portion 105 defines the combustion chamber B4 with the cylinder bore 26 of the cylinder block 21 and the piston 27. The combustion chamber defining portion 105 includes a recessed principal surface 29 opposed to the piston 27, an annular first rim 106 which is formed to sag away from (be concave relative to) the principal surface 29 and connects the principal surface 29 and the downstream end 32b of the air intake port 32, and an annular second rim 107 which is formed to sag away from (be concave relative to) the principal surface 29 and connects the principal surface 29 and the upstream end 31 a of the air exhaust port 31.

The boundary between the downstream end 32b of the air intake port 32 and the first rim 106 is the boundary between the main air intake passage B3 and the combustion chamber B4. The boundary between the upstream end 31a of the air exhaust port 31 and the second rim 107 is the boundary between the combustion chamber B4 and the air exhaust passage B5.

On the rear end of the cylinder head 22, an annular abutting surface 108 abuts the annular abutting surface 109 formed on the front end of the cylinder block 21 is provided. The principal surface 29 is recessed forward of the vehicle with respect to this abutting surface 108. The principal surface 29 is formed such that the bottom 29a of the principal surface 29 is recessed most deeply from the abutting surface 108. In other words, the principal surface 29 is recessed in the first axis direction L11 from the piston 27 to the cylinder head 22 of the axis directions L1 of the cylinder axis A2.

The principal surface 29 is smooth and curved. The first rim 106 and the second rim 107 divide the principal surface 29 into a first principal surface 111 and a second principal surface 112. The first principal surface 111 is arranged on the right of the cylinder axis A2, and distant from the housing chamber 102. The second principal surface 112 is arranged on the left of the cylinder axis A2, and near the housing chamber 102. The first principal surface 111 and the second principal surface 112 are formed asymmetrically.

At substantially the center of the first principal surface 111, a plug attaching hole 113 to which the ignition plug 104 is attached is formed. The ignition plug 104 includes a plug body 114 to be fixed to the plug attaching hole 113 and an igniter 115 including an electrode arranged on the distal end of the plug body 114.

The igniter 115 and the injection nozzle 47b of the injector 47 are arranged on the right of the cylinder axis A2. In other words, in the vehicle transverse direction Y1, the igniter 115 and the injection nozzle 47b are arranged on the same side of the cylinder axis A2. The igniter 115 is arranged inside the combustion chamber B4. The igniter 115 generates sparks by a discharge effect. Accordingly, air-fuel mixture mixing the fuel and air is burned.

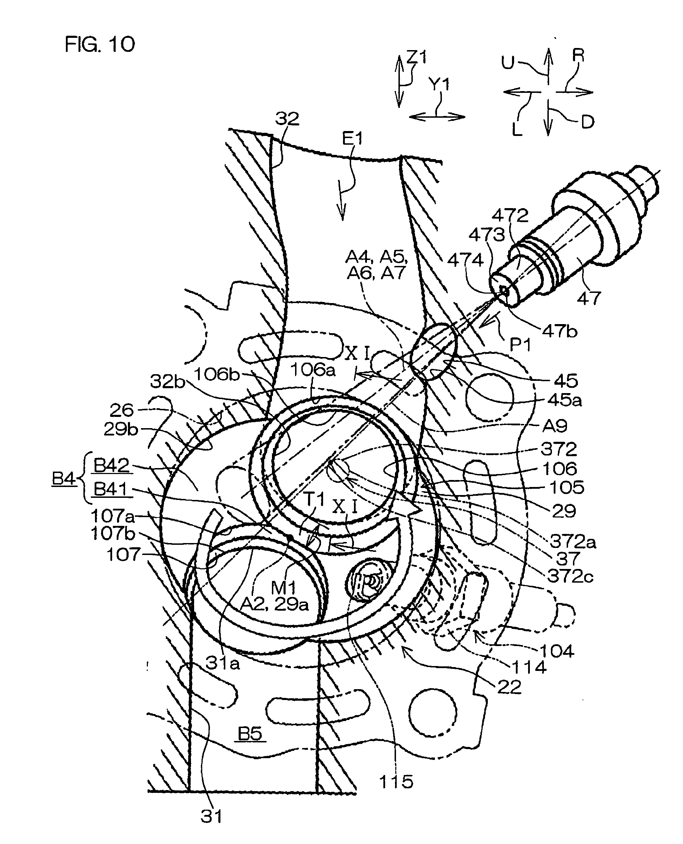

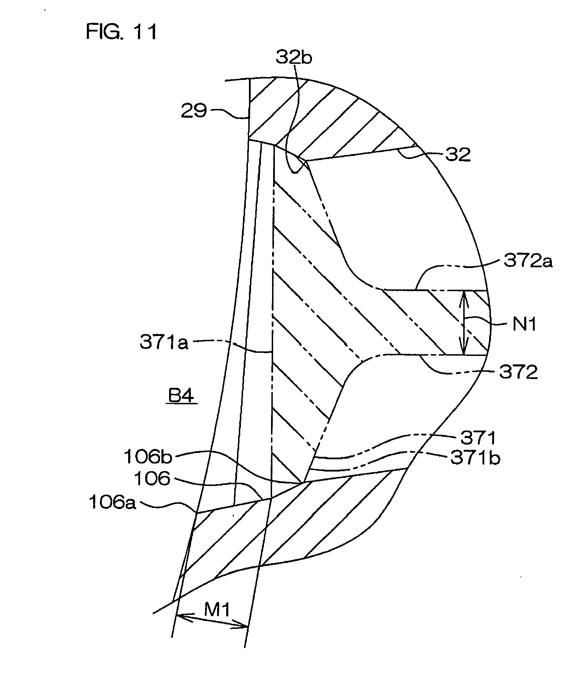

Fig. 10 is an enlarged view of major portions of Fig. 9B. The description with reference to Fig. 10 is given based on a state viewed in the cylinder axis direction along one direction L11 of the axis directions L1 (see Fig. 9A). Fig. 11 is a sectional view of major portions along the line XI-XI of Fig. 10.

Referring to Fig. 10 and Fig. 11, the first rim 106 is arranged nearer the upper right of the principal surface 29. The first rim 106 has a ring shape. The first rim 106 is tapered such that the diameter becomes smaller toward the downstream end 32b of the air intake port 32 from the principal surface 29.

Accordingly, an outer diameter portion 106a with the largest diameter of the first rim 106 is connected to the principal surface 29. The diameter of the outer diameter portion 106a is larger than the diameter of an outer diameter portion 107a described later of the second rim 107. An inner diameter portion 106b with the smallest diameter of the first rim 106 is connected to the downstream end 32b of the air intake port 32. The diameter of the inner diameter portion 106b is larger than the diameter of an inner diameter portion 107b described later of the second rim 107. The diameter of the downstream end 32b of the air intake port 32 is larger than the diameter of the upstream end 31 a of the air exhaust port 31.

The depth M1 of the first rim 106 from the principal surface 29 is not uniform in the circumferential direction of the first rim 106. In detail, on the first rim 106, the depth M1 of the first rim 106 becomes deeper toward the bottom 29a of the principal surface 29 from a position near the outer peripheral portion 29b of the principal surface 29. Accordingly, the air intake valve 37 is arranged offset.

The air intake valve 37 includes a valve head 371 and a valve shaft 372 having one end 372a connected to the valve head 371. In other words, one end 372a as the basal end of the valve shaft 372 is connected to the valve head 371. The valve head 371 is arranged on the downstream end 32b of the air intake port 32. This valve head 371 has a disk shape, and includes the first surface 371a opposed to the combustion chamber B4 and the second surface 371 b opposed to the air intake port 32.

The second surface 371b is tapered. The outer peripheral portion of the second surface 371 b closes the air intake port 32 by contact with the downstream end 32b of the air intake port 32.

Among the members of the air intake valve 37, a portion with a diameter N1 fixed is one end 372a of the valve shaft 372, and a portion with a diameter N1 changing in the axis direction of the air intake valve 37 is the valve head 371. In other words, along the axis direction of the air intake valve 37, a boundary between the portion with the diameter N1 fixed and the portion with the diameter N1 changing is the boundary between the one end 372a of the valve shaft 372 and the valve head 371.

As viewed in the cylinder axis direction, the second rim 107 is arranged nearer the lower left of the principal surface 29. The second rim 107 has a ring shape. In addition, the second rim 107 is tapered such that the diameter becomes smaller toward the upstream end 31 a of the air exhaust port 31 from the principal surface 29.

Accordingly, the outer diameter portion 107a with the largest diameter of the second rim 107 is connected to the principal surface 29. This outer diameter portion 107a is partially in contact with the outer diameter portion 106a of the first rim 106. The inner diameter portion 107b with the smallest diameter of the second rim 107 is connected to the upstream end 31 a of the exhaust port 31.

The depth of the second rim 107 from the principal surface 29 is not uniform in the circumferential direction of the second rim 107. In detail, on the second rim 107, a position near the bottom 29a of the principal surface 29 is deeper than a position near the outer peripheral portion 29b of the principal surface 29.

Next, the arrangement of the injection nozzle 47b of the injector 47 will be described.

Referring to Fig. 3 and Fig. 10, the injector 47 is a single-hole type injector having one injection nozzle 47b. The injector 47 injects the fuel in the form of mist in one injection direction P1.

The injection nozzle 47b is formed of a cylindrical surface of several hundred micrometers in diameter and length. The center axis A4 of the injection nozzle 47b corresponds to the center axis of the injector 47.

The injection nozzle 47b is formed coaxially with a disk-shaped end wall 473 in which the injection nozzle 47b is provided. Accordingly, the center axis A4 of the injection nozzle 47b matches the center axis A5 of the end wall 473. The center axis A4 of the injection nozzle 47b matches the center axis A6 of the cylindrical tube 472.

The injection nozzle 47b is formed coaxially with the cylindrical portion 48 of the holder 46. Accordingly, the center axis A4 of the injection nozzle 47b matches the center axis A7 of the cylindrical portion 48.

Further, the injection nozzle 47b is formed coaxially with the inner peripheral surface 45a on the distal end of the first boss 45. Accordingly, the center axis A4 of the injection nozzle 47b matches the center axis A8 of the inner peripheral surface 45a.

With the above-described configuration, in a state where the injector 47 is removed from the first boss 45, the shape of the cylindrical portion 48 of the holder 46 to which the injector 47 is attached or the inner peripheral surface 45a of the first boss 45, the direction, etc., of the center axis A4 of the injection nozzle 47b can be estimated.

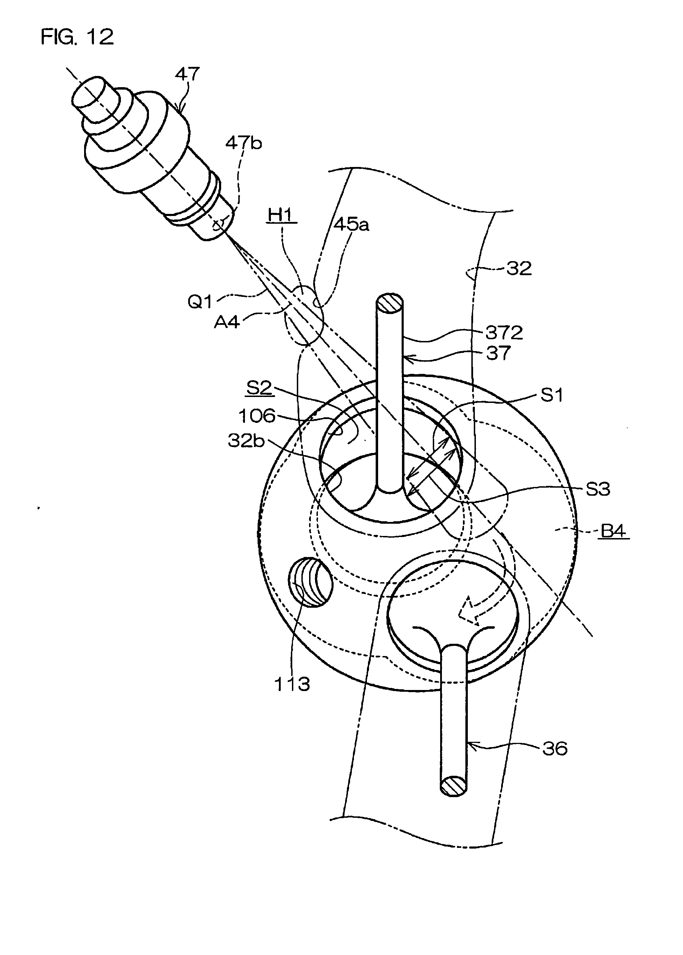

Fig. 12 is a schematic perspective view of major portions describing a state where the intake valve 37 is opened at a maximum opening degree. Referring to Fig. 12, the center axis A4 of the injection nozzle 47b passes through the inside of the opening edge 45a of the first boss 45 opened to the intake port 32.

In addition, the center axis A4 of the injection nozzle 47b passes through the inside of the downstream end 32b of the air intake port 32 and the inside of the first rim 106 and enters the combustion chamber B4. In other words, the center axis A4 of the injection nozzle 47b passes through the inside space H1 of the first boss 45, the downstream end 32b of the air intake port 32, and the combustion chamber B4. Accordingly, the fuel injected from the injection nozzle 47b can be made difficult to adhere to the wall surface of the air intake port 32. In other words, the fuel can be directly supplied into the combustion chamber.

Referring to Fig. 10, as viewed in the cylinder axis direction, a second virtual straight line A9 passing through one end 372a of the valve shaft 372 and the injection nozzle 47b is regulated.

This second virtual straight line A9 passes through the first portion 372c most distant from the igniter 115 of the peripheral surface of one end 372a of the valve shaft 372, and does not pass through the inside of one end 372a of the valve shaft 372. Further, the second virtual straight line A9 passes through the second portion 474 as a portion nearest the first portion 372c of the portion where the center axis A4 of the injection nozzle 47b overlaps the injection nozzle 47b.

Referring to Fig. 9A and Fig. 10, a virtual plane V1 including the abutting surfaces 108 and 109 of the cylinder block 21 and the cylinder head 22 is regulated. Fig. 10 is a view of the combustion chamber B4 substantially through the virtual plane V1 in the cylinder axis direction.

In the virtual plane V1, the combustion chamber B4 is divided into a first region B41 and a second region B42 by a second virtual straight line A9.

Referring to Fig. 10, as viewed in the cylinder axis direction, in the virtual plane V1, the area of the second region B42 is smaller than the area of the first region B41.

In the first region B41, the igniter 115 and one end 372a of the valve shaft 372 of the intake valve 37 are arranged.

In the second region B42, the center axis A4 of the injection nozzle 47b is arranged. The center axis A4 of the injection nozzle 47b and the bottom 29a of the principal surface 29 do not cross each other. Between the center axis A4 of the injection nozzle 47b and the igniter 115, the one end 372a of the valve shaft 372 of the air intake valve 37 is arranged.

As shown in Fig. 9A, the injection direction P1 of the fuel by the injection nozzle 47b is a direction from the injection nozzle 47b toward the combustion chamber B4 of the axis directions of the center axis A4 of the injection nozzle 47b. This injection direction P1 includes a component P11 which is parallel to the cylinder axis A2 and is from the igniter 115 toward the piston 27. The injection direction P1 further includes a component P12 orthogonal to the cylinder axis A2.

The injector 47 has a conical injection profile Q1. In other words, the injector 47 injects the fuel in the form of mist from the injection nozzle 47b so as to form the conical injection profile Q1.

Referring to Fig. 3, the injection profile Q1 has a conical shape having an apex set on the injection nozzle 47b and coaxial with the injection nozzle 47b.

It is known that injectors 47 have slight variations in fuel injection range and injection direction. Therefore, the injection profile Q1 shown in the drawings shows an injection form ideally set (ideal injection form). Hereinafter, descriptions on the fuel injection range and the injection direction are all in ideal states.

The fuel injected from the injection nozzle 47b is mixed with assist air which has passed through the auxiliary air intake passage C1 inside the injection space B2 as described above. In this case, the fuel collides with the assist air at a position nearest the injection nozzle 47b. Accordingly, the fuel injected in the form of mist from the injection nozzle 47b is decomposed into minute particles, and as a result, atomization of the fuel is promoted.

Referring to Fig. 10, the injection profile Q1 inside the combustion chamber B4 is positioned in the second region B42 and is not positioned in the first region B41. With the above-described configuration, one end 372a of the valve shaft 372 of the air intake valve 37 is arranged between the injection profile Q1 and the igniter 115.

Referring to Fig. 12, the fuel is injected from the injection nozzle 47b such that the injection profile Q1 is formed at a timing at which, for example, the air intake valve 37 is opened at the maximum opening degree. Of this injection profile Q1, the outer diameter S1 near the downstream end 32b of the air intake port 32 is regulated.

When the air intake valve 37 opens the downstream end 32b of the air intake port 32 at the maximum opening degree, a gap S2 is formed between the valve shaft 372 of the air intake valve 37 and the downstream end 32b. In the direction orthogonal to the center axis A4 of the injection nozzle 47b, the outer diameter S1 is made smaller than the width S3 of this gap S2 (S1 <S3).

When the downstream end 32b of the air intake port 32 is opened at the maximum opening degree, according to the above-described configuration, the injection profile Q1 can pass through between the downstream end 32b of the air intake port 32, the first rim 106 and the air intake valve 37 in a substantively non-contact state.

The injection profile Q1 may be set such that the injection profile Q1 can pass through the gap S2 near the downstream end 32b in a non-contact state in the middle of opening of the downstream end 32b by the air intake valve 37. At least, in the state where the downstream end 32b of the air intake port 32 is opened at the maximum opening degree, the above-described non-contact state is preferable.

As seen in Fig. 10, the injection profile Q1 is arranged so as not to be positioned at the position T1 with the deepest depth M1 from the principal surface 29 of the first rim 106. In the present embodiment, in the circumferential direction of the first rim 106, at a position approximately several tens of degrees away from the deepest position T1 of the first rim 106, the injection profile Q1 is formed.

With the above-described configuration, the injection direction P1 of the fuel injected from the injection nozzle 47b includes a component for making the air-fuel mixture swirl along the circumferential direction of the cylinder bore 26 (a component for generating a swirl flow).

Referring to Fig. 9A, the fuel enters the combustion chamber B4 from the diagonally upper side of the principal surface 29. Accordingly, the injection direction P1 includes a component along the second axis direction L12 from the principal surface 29 to the piston 27 of the axis directions L1 of the cylinder axis A2 (component for generating a tumble flow). Therefore, the flow pattern of the fuel inside the combustion chamber B4 becomes a complex pattern including both components of a tumble flow and a swirl flow.

As shown in Fig. 9A and Fig. 10A, in the circumferential direction of the combustion chamber B4, the air-fuel mixture enters the combustion chamber B4 from a position near the portion most distant from the ignition plug 104. This air-fuel mixture generates a swirl flow which swirls inside the combustion chamber B4 while advancing to the piston 27 side. Therefore, both of the propagation direction of a combustion wave generated according to ignition of the ignition plug 104 and the flow direction of the air-fuel mixture include a component along the second axis direction L12. Accordingly, the combustion wave and the air-fuel mixture hardly collide with each other, such that the combustion wave advances quickly, and as a result, this becomes an effective measure against knocking.

According to the present embodiment, the following operation and effect can be obtained. That is, by providing the auxiliary air intake passage C1, the intake air is led as assist air from the auxiliary air intake passage C1 to the injection space B2 at least while idling. Accordingly, the assist air is blown to the fuel injected in the form of mist from the injection nozzle 47b and promotes atomization of the fuel. As a result, the combustion efficiency of the fuel can be made high at least while idling.

In addition, the injector 47 is attached to the cylinder head 22, such that it is arranged near the combustion chamber B4. Accordingly, the injection nozzle 47b injects the fuel from a position near the combustion chamber B4. Therefore, the time until the fuel reaches the combustion chamber B4 from being injected from the injection nozzle 47b can be shortened. In other words, the time lag from the fuel injection to burning can be shortened. The fuel flow pattern can be thus made ideal, such that an ideal combustion state can be easily realized. As a result, the fuel can be more efficiently burned. Also, the engine response to the fuel injection operation can be made higher.

Further, as viewed in the cylinder axis direction, the one end 372a of the valve shaft 372 of the air intake valve 37 is arranged between the center axis A4 of the injection nozzle 47b and the igniter 115. Accordingly, the fuel injected in the form of mist from the injection nozzle 47b can be restrained from being directly sprayed toward the igniter 115, such that the ignition operation of the igniter 115 can be restrained from being obstructed. Therefore, reliable ignition can be performed by the igniter 115. As a result, the fuel can be more efficiently burned. In particular, in the present embodiment in which the fuel is injected from the injection nozzle 47b near the combustion chamber B4, the stream of the fuel when it enters the combustion chamber B4 is strong. In the configuration in which the stream of the fuel when it enters the combustion chamber B4 is thus strong, the effect improving the combustion efficiency obtained as a result of restraining direct spray of the fuel to the igniter 115 so as not to obstruct the ignition is great.

By blowing the assist air to the fuel, the fuel diffuses widely inside the main air intake passage B3 from the injection nozzle 47b. As a result, the fuel easily collides with the one end 372a of the valve shaft 372 of the air intake valve 37. On the other hand, in the present embodiment, as viewed in the cylinder axis direction, the center axis A4 of the injection nozzle 47b is arranged so as to avoid the one end 372a of the valve shaft 372 of the air intake valve 37. Accordingly, the fuel injected in the form of mist from the injection nozzle 47b can be restrained from colliding with the one end 372a of the valve shaft 372 of the air intake valve 37. As a result, the fuel with the degree of atomization still kept high can be supplied into the combustion chamber B4. Therefore, the combustion efficiency of the fuel can be made higher.

As described above, the fuel diffuses widely inside the main air intake passage B3 from the injection nozzle 47b. As a result, the fuel easily collides with the wall surface of the air intake port 32. However, as described above, the injection nozzle 47b is arranged at a position near the combustion chamber B4. Accordingly, the fuel can be supplied into the combustion chamber B4 so as to hardly collide with the wall surface of the air intake port 32. As a result, the fuel with the degree of atomization still kept high can be supplied into the combustion chamber B4. Therefore, the combustion efficiency of the fuel can be made higher.

In addition, the injector 47 injects the fuel not to a plurality of air intake ports but to one air intake port 32. Therefore, the degree of freedom of the arrangement of the injector 47 is high. As a result, as viewed in the cylinder axis direction, the configuration in which the one end 372a of the valve shaft 372 of the air intake valve 37 is arranged between the center axis A4 of the injection nozzle 47b and the igniter 115 can be easily realized.

For example, in a configuration in which the fuel is supplied into two air intake ports, the injector must be arranged in consideration of the layout of both air intake ports, and there are many restrictions in the arrangement of the injector. On the other hand, the present embodiment does not have these restrictions. Therefore, the present embodiment can be realized with a simple configuration.

Further, the center axis A4 of the injection nozzle 47b and the igniter 115 are arranged so as to sandwich the one end 372a of the valve shaft 372 of the air intake valve 37 as viewed in the cylinder axis direction. As a result of this configuration, inside the combustion chamber B4, the flow of the air-fuel mixture can be made a flow of composition of a tumble flow as a main flow and a swirl flow. As a result, the combustion efficiency of the fuel can be made higher.

As viewed in the cylinder axis direction, the one end 372a of the valve shaft 372 of the air intake valve 37 is arranged between the injection profile Q1 and the igniter 115. With this configuration, the fuel injected in the form of mist from the injection nozzle 47b can be more reliably restrained from colliding with the one end 372a of the valve shaft 372 of the air intake valve 37. Accordingly, the fuel with the degree of atomization still kept high can be supplied into the combustion chamber B4. Therefore, the fuel combustion efficiency can be improved. Also, as viewed in the cylinder axis direction, the injection profile Q1 can be restrained from overlapping the igniter 115. Accordingly, the ignition of the igniter 115 can be more reliably restrained from being obstructed by the spray of the fuel.

Therefore, an engine with high fuel efficiency can be provided. In other words, according to this embodiment, fuel can be prevented from colliding with the valve shaft 372 of the air intake valve 37, and injected fuel hardly obstructs the ignition of the igniter 115. As a synergy of these, combustion efficiency can be significantly improved.

Further, when the air intake valve 37 is opened at the maximum opening degree, the outer diameter S1 of the injection profile Q1 at the downstream end 32b is smaller than the width S3 of the gap S2 between the air intake valve 37 and the downstream end 32b of the air intake port 32 (S1<S3). Accordingly, the fuel can be restrained from colliding with the wall surface of the air intake port 32 and the surface of the air intake valve 37. Therefore, the fuel with the degree of atomization still kept higher can be supplied into the combustion chamber B4, such that the fuel combustion efficiency can be made higher.

The injection direction P1 of the fuel by the injection nozzle 47b includes a component P11 which is parallel to the cylinder axis A2 and is from the igniter 115 side toward the piston 27 side. Accordingly, the flow direction of the air-fuel mixture inside the combustion chamber B4 can be made close to the propagation direction of the flame from the igniter 115. Accordingly, the propagation speed of the combustion wave inside the combustion chamber B4 can be increased. As a result, knocking (abnormal combustion) can be restrained.

Further, as viewed in the cylinder axis direction, the cylinder axis A2 is positioned between the first virtual straight line A3 and the chain 101. Accordingly, the injector 47 is attached to a position away from the chain 101, such that the attachment space of the injector 47 is easily secured without increasing the size of the engine.

The injection profile Q1 is formed so as not to be positioned at the position T1 deepest from the principal surface 29 of the first rim 106 of the combustion chamber defining portion 105. Accordingly, the fuel injected from the injection nozzle 47b can be restrained from colliding with the wall surface of the first rim 106. Accordingly, the fuel with the degree of atomization still kept higher can be supplied into the combustion chamber B4, such that the fuel combustion efficiency can be made higher.

Accordingly, the motorcycle 1 with extremely high fuel combustion efficiency can be realized. As compared to an automobile, in the case of a straddle type vehicle such as the motorcycle 1, a direct sense of engine response is preferred. In other words, in the motorcycle 1, etc., high engine response to a rider's throttle operation is preferred. Further, a rider frequently performs a throttle operation. To obtain the direct sense of the engine body 14, it is strongly demanded that a rider's throttle operation is quickly reflected in the operation of the engine body 14 by shortening the time until combustion of the fuel from injection from the injector 47. Therefore, in the present embodiment, preferably, the engine unit 13 is applied to a straddle type vehicle such as the motorcycle 1.

### <Other embodiments>

The present invention is not limited to the embodiments described above with reference to the drawings. For example, the following embodiments are also included in the technical scope of the present invention. Further, these various modification may be made without departing from the spirit and scope of the present invention.

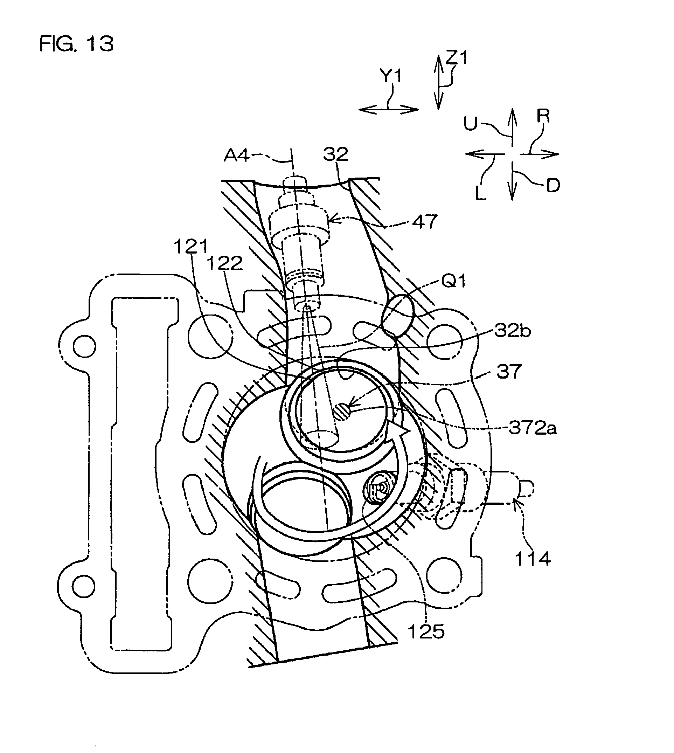

(1) As shown in Fig. 13, a state viewed in the cylinder axis direction is considered. In this case, the injector 47 may be arranged to overlap the air intake port 32. Between a first crossing portion 121 which crosses the downstream end 32b of the air intake port 32, of the center axis A4 of the injection nozzle 47b, and the igniter 115, the one end 372a of the valve shaft 372 of the air intake valve 37 is arranged.

Between a second crossing portion 122 which overlaps the downstream end 32b of the air intake port 32, of the injection profile Q1 and the igniter 115, the one end 372a of the valve shaft 372 of the air intake valve 37 is arranged.

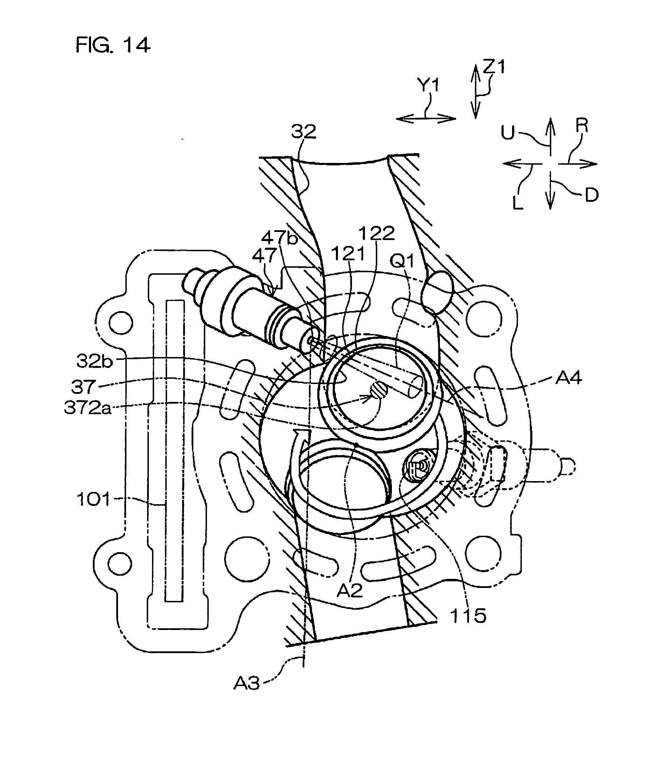

(2) As shown in Fig. 14, a state viewed from the cylinder axis direction is considered. In this case, the injector 47 may be arranged adjacent to the chain 101. In other words, the injector 47 is arranged on the chain 101 side with respect to the cylinder axis A2, and is arranged on the left of the cylinder axis A2. Between the first crossing portion 121 which crosses the downstream end 32b of the air intake port 32, of the center axis A4 of the injection nozzle 47, and the igniter 115, the one end 372a of the valve shaft 372 of the air intake valve 37 is arranged.

Between the second crossing portion 122 which overlaps the downstream end 32b of the air intake port 32, of the injection profile Q1, and the igniter 115, the one end 372a of the valve shaft 372 of the air intake valve 37 is arranged.

Between the cylinder axis A2 and the chain 101, the first virtual straight line A3 is arranged. The first virtual straight line A3 passes through, for example, the center of the injection nozzle 47b.

In this case, in the circumferential direction of the cylinder bore 26, the direction of the swirl flow is reverse to that in the first embodiment.

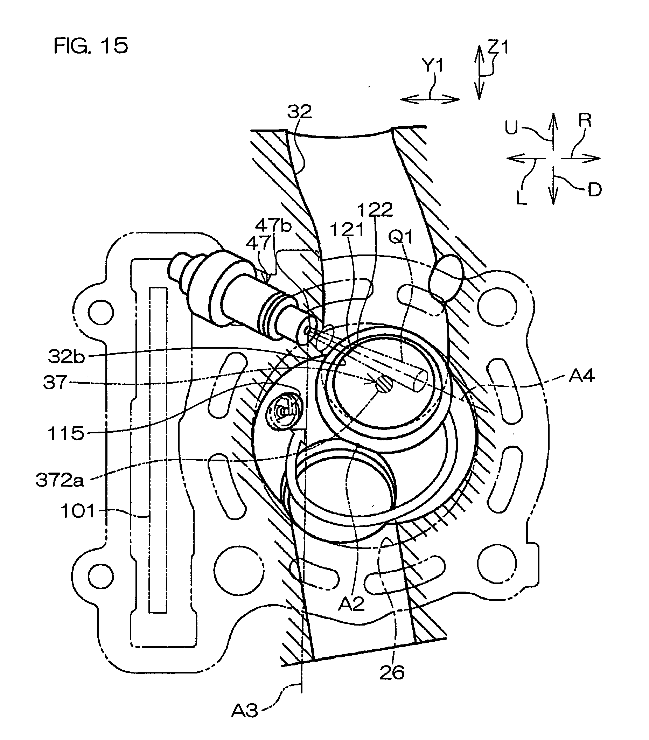

(3) As shown in Fig. 15, a state viewed in the cylinder axis direction is considered. In this case, in addition to the injector 47, the igniter 115 is arranged adjacent to the chain 101. In other words, the injector 47 and the igniter 115 are arranged on the chain 101 side with respect to the cylinder axis A2, and is arranged on the left of the cylinder axis A2.

In this case, in the circumferential direction of the cylinder bore 26, the direction of the swirl flow is reverse to that in the case of the first embodiment.

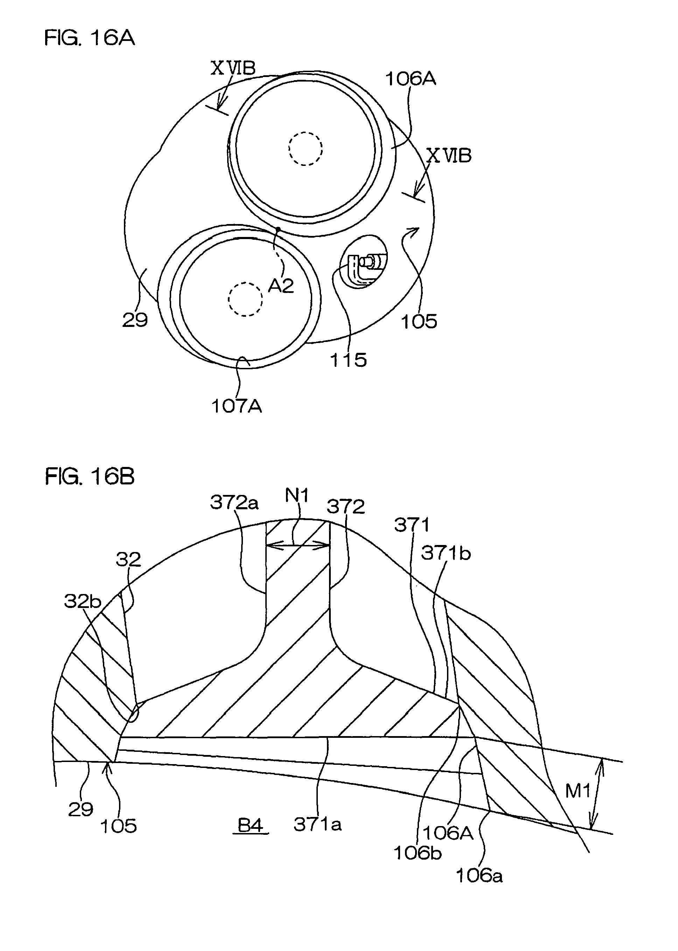

(4) Instead of the first rim 106 and the second rim 107 of the combustion chamber defining portion 105, the first rim 106A and the second rim 107A shown in Fig. 16A and Fig. 16B may be provided. The depth M1 of the first rim 106A from the principal surface 29 becomes deeper toward the downstream side of one of directions around the cylinder axis A2 (downstream side of the clockwise direction of Fig. 16A). The rest of the configuration of the first rim 106A is the same as that of the first rim 106.

The second rim 107A is formed such that the depth from the principal surface 29 increases toward the downstream side of one of the directions around the cylinder axis A2 (downstream side of the clockwise direction of Fig. 10A). The rest of the configuration of the second rim 107A is the same as that of the second rim 107.

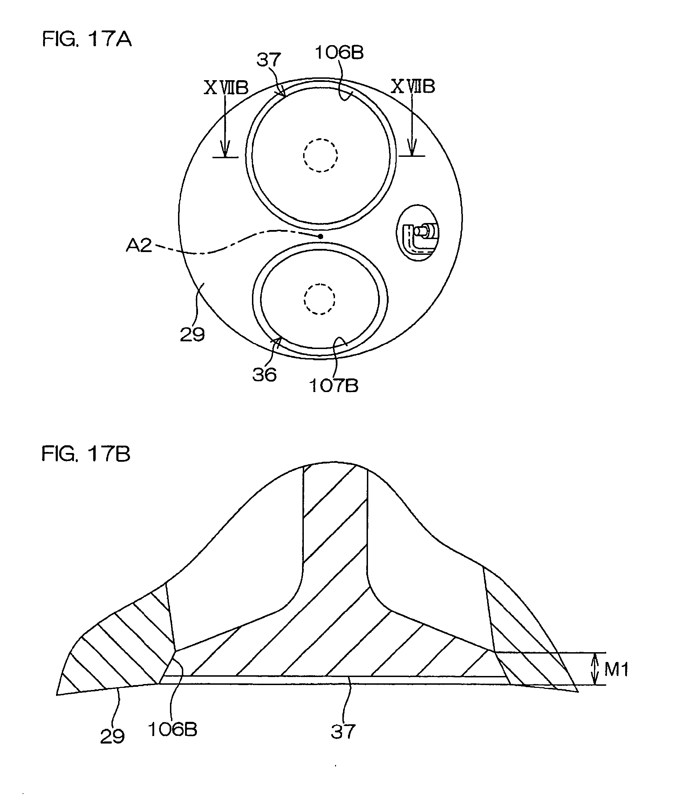

(5) Instead of the first rim 106 and the second rim 107, as shown in Fig. 17A and Fig. 17B, a first rim 106B and a second rim 107B may be provided. The depth M1 of the first rim 106B from the principal surface 29 is substantially uniform in the circumferential direction of the first rim 106B. In other words, the air intake valve 37 is arranged in a non-offset manner. The rest of the configuration of the first rim 106B is the same as that of the first rim 106.

The depth of the second rim 107B from the principal surface 29 is substantially uniform in the circumferential direction of the second rim 107B. In other words, the air exhaust valve 36 is arranged in a non-offset manner. The rest of the configuration of the second rim 107B is the same as that of the second rim 107.

(6) As viewed in the cylinder axis direction, a part of the injection profile may overlap one end of the valve shaft of the air intake valve.

(7) The direction of injection of the fuel by the injector may be orthogonal to the cylinder axis.

(8) As viewed in the cylinder axis direction, the chain may be arranged between the first virtual straight line crossing the injector and the cylinder axis.

(9) The injection profile may be at a position deepest from the principal surface of the combustion chamber defining portion.

(10) The position relationship among the air intake and exhaust ports, the ignition plug, and the fuel injection valve is not limited to the relationships of the embodiments described above. For example, as viewed in the cylinder axis direction, the downstream end of the air intake port may be arranged near the chain, and the upstream end of the air exhaust port may be arranged distant from the chain.

(11) The first rim of the combustion chamber defining portion may be omitted. In this case, the principal surface of the combustion chamber defining portion and the downstream end of the air intake port are directly connected. The second rim of the combustion chamber defining portion may be omitted. In this case, the principal surface of the combustion chamber defining portion and the upstream end of the air exhaust port are directly connected.

(12) In the embodiments described above, a single-cylinder engine is described, however, the present invention is also applicable to multi-cylinder engines. Further, the present invention is applicable to air-cooled engines.

### Description of the Reference Numerals

1... motorcycle (straddle type vehicle)
13... vehicle engine unit
21... cylinder block
22... cylinder head
27... piston
29... principal surface
32... air intake port
32b... downstream end (connection portion)
37... air intake valve
40... cam shaft
47... injector (fuel injection device)
47b... injection nozzle
62... air intake pipe
64... tubular member
68... throttle body
69A, 69B... throttle valve
91... auxiliary air intake passage defining member
101... chain
104... ignition plug
105... combustion chamber defining portion
106, 106A, 106B... first rim (annular rim)
115... igniter
371... valve head (of air intake valve)
372... valve shaft
372a... one end (of valve shaft of air intake valve)
A2... cylinder axis
A3... first virtual straight line (virtual straight line)
A4... center axis of injection nozzle
B2... injection space (space near injection nozzle)
B3... main air intake passage
B4... combustion chamber
C1... auxiliary air intake passage
E1... air intake flow direction
M1... depth of rim
P1... injection direction (direction of injecting the fuel)
P11... component parallel to cylinder axis
Q1... injection profile
S1... outer diameter (of injection profile at connection portion) S2... gap
S3... width of gap
T1... position deepest from principal surface

## Claims

1. A vehicle engine unit comprising:
a cylinder block which accommodates a piston in a manner allowing the piston to reciprocate along a cylinder axis;
a cylinder head which has a combustion chamber defining portion defining a combustion chamber with the cylinder block and the piston, and one air intake port defining a part of a main air intake passage communicating with the combustion chamber, and is connected to the cylinder block;
an air intake valve which includes a valve head arranged at a connection portion of the air intake port connected to the combustion chamber defining portion and a valve shaft having a first end connected to the valve head, and is arranged to open and close the air intake port;
an ignition plug which has an igniter arranged inside the combustion chamber and is attached to the cylinder head;
a fuel injection device which has an injection nozzle for injecting fuel toward the combustion chamber through the air intake port, and is attached to the cylinder head;
an air intake pipe which is connected to the cylinder head and defines the main air intake passage with the air intake port;
a throttle body which has a tubular member forming a part of the air intake pipe and first and second throttle valves spaced from each other in an intake air flow direction inside the tubular member; and
an auxiliary air intake passage defining member defining an auxiliary air intake passage which is branched from the main air intake passage between the first and second throttle valves and leads the intake air to a space near the injection nozzle at least while idling, wherein
as viewed in the cylinder axis direction, the first end of the valve shaft is arranged between a center axis of the injection nozzle and the igniter.

2. The vehicle engine unit according to Claim 1, wherein
the fuel injection device has a conical injection profile, and
as viewed in the cylinder axis direction, the first end of the valve shaft is arranged between the injection profile and the igniter.

3. The vehicle engine unit according to Claim 1 or 2, wherein
the fuel injection device has a conical injection profile, and
the outer diameter of the injection profile at the connection portion is smaller than the width of a gap between the air intake valve and the connection portion when the air intake valve is opened at a maximum opening degree.

4. The vehicle engine unit according to any preceding claim, wherein
a direction of injection of the fuel by the injection nozzle includes a component which is parallel to the cylinder axis.

5. The vehicle engine unit according to any preceding claim, further comprising:
an endless chain joined to a cam shaft for driving the air intake valve, wherein
as viewed in the cylinder axis direction, the cylinder axis is positioned between a virtual straight line which crosses the fuel injection device and is parallel to the chain, and the chain.

6. The vehicle engine unit according to any preceding claim, wherein
the combustion chamber defining portion includes a recessed principal surface and an annular rim which sags away from the principal surface and connects the principal surface and the connection portion of the air intake port,
the depth of the rim from the principal surface is not uniform in the circumferential direction of the rim, and
the fuel injection device has a conical injection profile which is arranged so as not to be positioned at a position of the rim deepest from the principal surface.

7. A straddle type vehicle comprising the vehicle engine unit according to any one of Claims 1 to 6.
